# EUROPEAN PATENT APPLICATION

(11) **EP 2 886 812 A1**
(43) Date of publication of application: **24.06.2015**
(21) Application number: 14189647.2
(22) Date of filing: 21.10.2014
(51) Int. Cl.: F01K 23/06, F01N 5/02, F02G 5/04, B01D 45/00, F02M 25/07, F01P 3/22

(54) **System of recycling exhaust heat from internal combustion engine**

(30) Priority: 23.12.2013 KR 20130161694
(71) Applicant: Hyundai Motor Company, Seoul 137-938 (KR)
(72) Inventor: Son, You Sang, 443-706 Suwon-si, Gyeonggi-do (KR); Kim, Sei Young, 463-400 Seongnam-si, Gyeonggi-do (KR)
(74) Representative: Viering, Jentschura & Partner Patent- und Rechtsanwälte

(57) **Abstract**

A system of recycling exhaust heat from an internal combustion engine may include a working fluid circulating line configured to rotate a turbine with a working fluid vaporized by heat received from an EGR line of the internal combustion engine, an EGR side heat exchanging unit configured to perform a heat exchange between an EGR gas and the working fluid to thereby cool the EGR gas and transfer heat from the EGR gas to the working fluid, and a gas-liquid separator configured to be formed between the EGR side heat exchanging unit and the turbine to thereby supply only a gas component of the working fluid to the turbine.

## Description

### CROSS-REFERENCE TO RELATED APPLICATION

The present application claims priority of Korean Patent Application Number 10-2013-0161694 filed on December 23, 2013, the entire contents of which application are incorporated herein for all purposes by this reference.

### BACKGROUND OF INVENTION

### Field of Invention

The present invention relates to a system of recycling exhaust heat from an internal combustion engine, and more particularly, to a system of recycling exhaust heat from an internal combustion engine including a recycling scheme circulating a working fluid using exhaust heat from the internal combustion.

### Description of Related Art

An internal combustion engine is widely used in a vehicle, a ship, a small generator, and the like, and an attempt to increase efficiency of the internal combustion engine has been continuously conducted. The internal combustion engine generally discharges a large amount of heat as exhaust heat, and several systems collecting the exhaust heat to increase entire efficiency of the internal combustion engine have been developed.

When considering an apparatus and parts, an increase in load, and the like necessary to configure a system of collecting an exhaust heat, it is more efficient to mount a system of recycling exhaust heat in a large vehicle having large displacement and capable of carrying many people or cargo rather than a small vehicle having small displacement and which is light.

In a case of the vehicle, the system of recycling the exhaust heat includes a system using a turbo-compound and a system using a thermoelectric element.

The system using the turbo-compound is a scheme by attaching an exhaust turbine to an exhaust line and rotating the exhaust turbine by exhaust pressure to obtain an output, wherein this scheme may increase thermal efficiency of the entire system having the internal combustion engine installed therein, but may decrease the output of the engine itself due to the exhaust turbine acting as an exhaust resistance.

The system using the thermoelectric element uses a scheme of charging electric using the thermoelectric element generating electric using a temperature difference or assisting the engine by driving an auxiliary motor using the generated electric. However, since cost of the thermoelectric element itself is negligible and a space in which the thermoelectric element may be mounted is narrow, it is difficult to significantly increase thermal efficiency of the engine even though the thermoelectric element is actually mounted in a mass-produced vehicle.

In order to solve the above-mentioned problem and/or other problems, inventors of the present invention have developed a system of recycling exhaust heat circulating a working fluid using heat transferred from an exhaust side of the internal combustion engine and rotating the turbine using the working fluid. However, it is noted that the system of recycling the exhaust heat is not published to those without having the duty of confidentiality based on the point of time at which the present invention is filed.

In order to increase efficiency of the system of recycling exhaust heat, the working fluid needs to be maximally evaporated and to be supplied to the turbine at high speed in a high energy state. However, due to various factors such as a layout in which the internal combustion engine is installed in the vehicle, and the like, an ambient temperature, a case in which a temperature is low such as a winter, and the like, a portion of the working fluid in a gas state may be liquefied before it is supplied to the turbine, and when the working fluid in a liquid state is introduced into the turbine, an internal effective volume in the turbine may be decreased, thereby decreasing efficiency of the system of recycling exhaust heat.

The information disclosed in this Background section is only for enhancement of understanding of the general background of the invention and should not be taken as an acknowledgement or any form of suggestion that this information forms the prior art already known to a person skilled in the art.

### SUMMARY OF INVENTION

Accordingly, the present invention has been made to solve the above-mentioned problems occurring in the prior art and/or other problems while advantages achieved by the prior art are maintained intact.

The present invention is directed to provide a system of recycling exhaust heat from an internal combustion engine capable of increasing efficiency thereof by maximally securing an internal effective volume in a turbine.

In various aspects of the present invention, there is provided a system of recycling exhaust heat from an internal combustion engine, the system including a working fluid circulating line configured to rotate a turbine with a working fluid vaporized by heat received from an EGR line of the internal combustion engine, an EGR side heat exchanging unit configured to perform a heat exchange between an EGR gas and the working fluid to thereby cool the EGR gas and transfer heat from the EGR gas to the working fluid, and a gas-liquid separator configured to be formed between the EGR side heat exchanging unit and the turbine to thereby supply only a gas component of the working fluid to the turbine.

The gas-liquid separator may include a liquid receiving chamber capable of receiving the working fluid in a liquid state therein; and a communicating pipe fluidically-communicating a turbine introducing pipe, which is a conduit connecting the turbine to the EGR side heat exchanging unit, and the liquid receiving chamber with each other. The communicating pipe may include a first communicating pipe disposed to be adjacent to the EGR side heat exchanging unit and a second communicating pipe disposed to be adjacent to the turbine.

A diameter of a portion connected to the first communicating pipe of the turbine introducing pipe may be substantially the same as a diameter of a portion connected to the second communicating pipe of the turbine introducing pipe. The liquid receiving chamber may be disposed at a lower position than the turbine introducing pipe. The communicating pipe may have an upper end portion connected to a side portion or a lower portion of the turbine introducing pipe.

The system may further include an exhaust side heat exchanging unit installed at an exhaust line discharging an exhaust gas to an outside to thereby transfer heat from the exhaust gas to the working fluid. The exhaust side heat exchanging unit may be disposed at a higher side of the working fluid circulating line than the EGR side heat exchanging unit.

The working fluid may always pass through the exhaust side heat exchanging unit, and the working fluid may pass through the EGR side heat exchanging unit only when a temperature of the exhaust gas flowing in the EGR line is equal to or greater than a specific temperature T1. The specific temperature T1 may be 500 °C.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a conceptual view of an exemplary system of recycling exhaust heat from an internal combustion engine according to the present invention;
FIG. 2 is a perspective view of an exemplary gas-liquid separator included in an exemplary system of the present invention; and
FIG. 3 is a schematic view showing a working fluid flowing in an exemplary gas-liquid separator and an exemplary turbine introducing pipe.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

Terms and words used in the present specification and claims are not to be construed as a general or dictionary meaning but are to be construed as meaning and concepts meeting the technical ideas of the present invention based on a principle that the inventors can appropriately define the concepts of terms in order to describe their own inventions in best mode.

The sizes of components illustrated in the drawings or specific portions forming the components may be exaggerated omitted or schematically illustrated for clarity and convenience. Therefore, the size of each component does not exactly reflect its real size. Further, when it is determined that the detailed description of the known function or configuration related to the present invention may obscure the gist of the present invention, the detailed description thereof will be omitted.

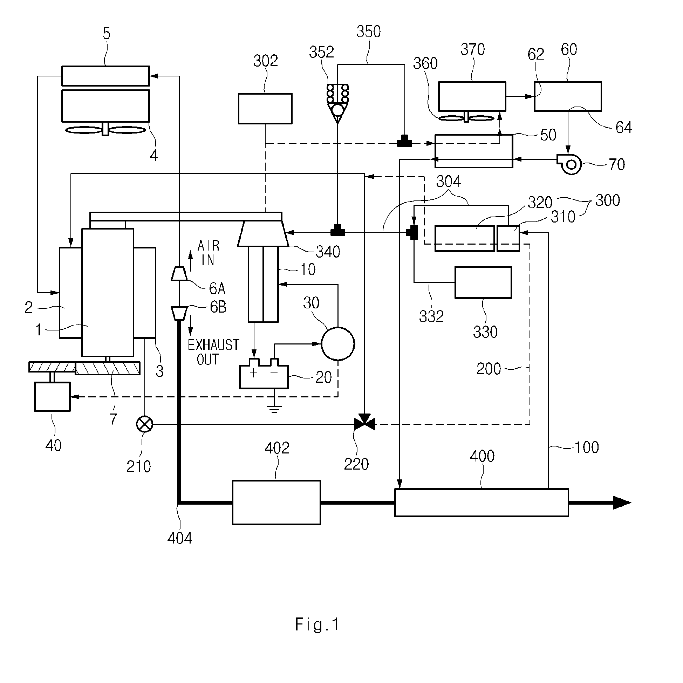

FIG. 1 is a conceptual view of a system of recycling exhaust heat from an internal combustion engine according to various embodiments of the present invention.

The present invention focuses on solving a problem generated in the case in which a working fluid vaporized by heat transferred from an EGR line 200 to thereby be supplied to a turbine 340 is liquefied. However, before solving this problem, an outline of the system of recycling including a passage in which an exhaust gas, an EGR gas, and the working fluid flow and the respective configurations positioned on the passage will be described for operating the system of recycling and a configuration related to the solution of the problem that the working fluid supplied to the turbine 340 is liquefied and effect generated from the configuration will be then described.

Referring to FIG. 1, the system of recycling exhaust heat from the internal combustion engine (hereinafter, referred to as 'the system of recycling') according to various embodiments of the present invention may include an EGR line 200 circulating a portion of an exhaust gas generated from the internal combustion engine to an intake side, a working fluid circulating line 100 rotating a turbine 340 with a working fluid vaporized by heat transferred from the EGR line 200, an EGR side heat exchanging unit 300 transferring heat from an EGR gas to the working fluid, and an exhaust side heat exchanging unit 400 installed at an exhaust line discharging an exhaust gas to the outside to thereby transfer heat from the exhaust gas to the working fluid.

The working fluid always passes through the exhaust side heat exchanging unit 400 and passes through the EGR side heat exchanging unit 300 only when a temperature of the exhaust gas flowing in the EGR line 200 is a specific temperature T1 or more. Based on a diesel engine 1, T1 may be set to 500 °C or about 500 °C.

Hereinafter, a circulation path through the EGR line 200 of the EGR gas will be described as an example such as when T1 is set to 500 °C.

When the EGR gas applied to an EGR bypass valve 220 through an EGR valve 210 from an exhaust manifold 3 has a temperature of 500 °C or more, the EGR bypass valve 220 is opened, such that the EGR gas is moved to a right of the EGR bypass valve 220 and is supplied to the intake manifold 2 side while passing through the EGR side heat exchanging unit 300, based on FIG. 1. On the other hand, when the EGR gas has the temperature which is less than 500 °C, the EGR bypass valve 220 is closed, such that the EGR gas is moved to an upper side of the EGR bypass valve 220 and is supplied to the intake manifold 2 side while not passing through the EGR side heat exchanging unit 300, based on FIG. 1.

As such, when the temperature of the exhaust gas is low such as at the time of an initial engine start, an engine 1 may be preheated by introducing the EGR gas into the intake manifold 2 without passing through the EGR side heat exchanging unit 300, and exhaust heat may be recycled by applying the exhaust gas to the EGR side heat exchanging unit 300 after the temperature of the exhaust gas is sufficiently increased.

Meanwhile, the EGR side heat exchanging unit 300 thermally connects the EGR line 200 and the working fluid circulating line 100 to each other, cools the EGR gas by performing heat-exchange between the EGR gas and the working fluid, and transfers heat from the EGR gas to the working fluid. In addition, the EGR side heat exchanging unit 300 has an EGR cooler 320 cooling the EGR gas and a super heater 310 transferring heat from the EGR gas to the working fluid passing through the exhaust side heat exchanging unit 400.

Based on a flow in which the EGR gas is introduced into the EGR side heat exchanging unit 300, the super heater 310 may be disposed at a higher side than the EGR cooler 320. In this case, since the EGR gas may transfer a large amount of heat to the working fluid while passing through the super heater 310 and the EGR gas having an amount of heat which is not transferred to the working fluid is cooled by the EGR cooler 320 for the first time, the working fluid may collect as large the amount of heat as possible from the EGR gas.

Hereinafter, a path in which the working fluid is circulated on the working fluid circulating line 100 will be described.

The working fluid is supplied to a working fluid pump 70 through an outlet 64 of a reservoir tank 60 storing the working fluid which is in a liquid state and having an inlet 62 and the outlet 64, and the working fluid pumped by the working fluid pump 70 is heated while passing through a recuperator 50. The working fluid passing through the recuperator 50 is supplied to the exhaust side heat exchanging unit 400 to thereby again receive heat and receives heat through the super heater 310 provided in the EGR side heat exchanging unit 300. Here, the exhaust side heat exchanging unit 400 may be formed in a structure enabling the working fluid to contact a surface of an exhaust pipe 404 and receive heat from the exhaust gas. In this case, since there is no an exhaust resistance unlike a system using a turbo compound, a phenomenon in which the output of the engine 1 itself is decreased may not be generated.

Meanwhile, the working fluid in the liquid state which is not vaporized until it passes through the super heater 310 is separated by a gas-liquid separator 330. Here, only the working fluid in a gas state passing through the super heater 310 is supplied to the turbine 340. The gas-liquid separator 330 will be described in detail below.

As such, since the working fluid receives heat from the recuperator 50 and the exhaust side heat exchanging unit 400 is disposed at a higher side of the working fluid circulating line 100 than the EGR side heat exchanging unit 300, the working fluid additionally receives heat while sequentially passing through the exhaust side heat exchanging unit 400 and the EGR side heat exchanging unit 300.

The working fluid in the gas state is supplied to the turbine 340 to thereby rotate the turbine 340 and the working fluid losing energy by rotating the turbine 340 passes through the recuperator 50 and is returned to the inlet 62 of the reservoir tank 60.

The working fluid which is circulated through the path as described above may satisfy a Rankine cycle condition, wherein Rankine cycle, which is a cycle configured of two adiabatic changes and two isobaric changes, refers to a cycle in which the working fluid involves a phase change of steam and liquid. Since Rankine cycle is one of well-known cycles, a detail description thereof will be omitted.

The recuperator 50 is fluid-communicated with both the inlet 62 and the outlet 64 of the reservoir tank 60 to thereby heat-exchange the working fluid introduced to the reservoir tank 60 and the working fluid flew out from the reservoir tank 60 with each other.

In view of the working fluid flew out from the outlet 64 of the reservoir tank 60, this working fluid is heated by receiving heat from the working fluid which passes through the turbine 340 and is then introduced to the recuperator 50. On the other hand, in view of the working fluid which passes through the turbine 340 and is then introduced to the recuperator 50, this working fluid is cooled by the working fluid flew out from the outlet 64 of the reservoir tank 60. As such, the recuperator 50 is disposed at a higher side of the reservoir tank 60 based on the inlet 62 of the reservoir tank 60 and is disposed at a lower side of the reservoir tank 60 based on the outlet 64 of the reservoir tank 60, such that it may allow the working fluid supplied to the reservoir tank 60 to be stably supplied in a liquid state, preheat the working fluid before supplying the working fluid to the exhaust side heat exchanging unit 400, and increase efficiency of exhaust heat collection.

The working fluid circulating line 100 may include a TEG condenser 370 and a cooling fan 360. The TEG condenser 370 is disposed between the inlet 62 of the reservoir tank 60 and recuperator 50 to take away the amount of heat from the working fluid, thereby playing a predetermined role in making the working fluid flowing into the reservoir tank 60 into the liquid state. In addition, a pipe between the recuperator 50 and the TEG condenser 370 is configured of a working fluid radiator which is bent by a plurality of times, and the working fluid may further cooled by blowing a stream of air into the working fluid radiator by the cooling fan 360.

Meanwhile, the working fluid pump 70 is disposed between the reservoir tank 60 and the recuperator 50, wherein in the case in which the working fluid flowing in the pipe connecting the reservoir tank 60 and the working fluid pump 70 to each other is vaporized by absorbing heat from the surrounding, pumping efficiency may be decreased. In order to prevent the decrease in pumping efficiency as described above, the pipe connecting the reservoir tank 60 and the working fluid pump 70 to each other may be insulated.

In the working fluid circulating line 100, a point on a turbine introducing pipe 304 which is a conduit connecting the turbine 340 to the EGR side heat exchanging unit 300 and a point between the turbine 340 and the recuperator 50 are connected to each other by a working fluid bypass 350, and the working fluid bypass 350 is installed with a working fluid bypass valve 352 selectively bypassing the working fluid to the recuperator 50.

In the case in which the working fluid exceeds a specific temperature or pressure, a molecular structure thereof may be destroyed, thereby losing unique material property thereof. As such, in the case in which the working fluid may lose unique material property, in order to return the working fluid to a normal state before it passes through the turbine 340, the working fluid is supplied to the recuperator 50 using the working fluid bypass valve 352. The working fluid bypassed to the recuperator 50 may pass through the recuperator 50 and may be returned to the normal state.

It is ideal to circulate only the working fluid in the working fluid circulating line 100, but a working fluid of a high temperature needs to rotate the turbine 340 and the turbine 340 is lubricated by a turbine lubricating oil to prevent the turbine 340 from being damaged while rotating at high speed. Therefore, the working fluid passing through the turbine 340 may be mixed with the turbine lubricating oil and an oil separator 302 for separating other fluids other than the working fluid, including the turbine lubricating oil discharged from the turbine 340 from the working fluid circulating line 100 may be formed at the pipe between the turbine 340 and the recuperator 50.

In the internal combustion engine having a turbo charger mounted thereon, as shown in FIG. 1, the exhaust gas discharged through the exhaust manifold 3 rotates an impeller 6B formed on an end portion of the exhaust manifold 3 side of the exhaust pipe 404 at high speed and rotates an intake side impeller 6A formed coaxially with the impeller 6B, such that a supercharged air may be introduced into an intake manifold 2 through an intercooler 5 and an engine radiator 4. The exhaust gas passing through the impeller 6B may sequentially pass through a post-processing unit 402 and the exhaust side heat exchanging unit 400 through the exhaust pipe 404 to thereby be discharged to the outside of the internal combustion engine. Here, the post-processing unit 402, which is installed at the exhaust line to decrease contaminant of the exhaust gas, may have a catalytic converter, an activated charcoal, and the like embedded therein.

In order for the post-processing unit 402 to purify the exhaust gas, in the most case, the temperature of the exhaust gas needs to be high. On this account, the exhaust side heat exchanging unit 400 may be formed at a lower side of the post-processing unit 402 installed at the exhaust line.

The discharging path of the exhaust gas in the internal combustion engine having the turbo charger mounted thereon has been described with reference to FIG. 1. However, in a case of a natural intake type internal combustion engine in which the impellers 6A and 6B, and the like are not formed, the exhaust gas discharged from the exhaust manifold 3 may sequentially pass through the post-processing unit 402 and the exhaust side heat exchanging unit 400 through the exhaust pipe 404 to thereby be discharged to the outside of the internal combustion engine.

Hereinafter, a scheme or configuration using torque of the turbine 340 which is rotated by the working fluid will be described.

Referring to FIG. 1, the motor generator 10 may be rotated with a rotation shaft of the turbine 340, store the torque in a battery 20 by receiving the torque from the turbine 340 or apply power to the rotation shaft installed in the internal combustion engine, and receive power from the battery 20 to thereby apply power to the rotation shaft installed in the internal combustion engine.

More specifically, the turbine 340 and a rotor of the motor generator 10 may be coaxially connected to each other, the turbine 340 may be connected to a pulley (which may be connected to an upper end portion of the turbine based on FIG. 1) by a clutch, and the clutch may intermit the turbine 340 and the pulley.

When the turbine 340 is rotated, the motor generator 10 may generate power and store power in the battery 20. In the case in which the clutch release the turbine 340 and the pulley from each other, the rotation of the turbine 340 is used to only generate power, and in the case in which the clutch connects the turbines 340 and the pulley to each other, the torque of the turbine 340 may be used to generate power and apply the driving force to the rotation shaft installed in the internal combustion engine. Here, the rotation shaft installed in the internal combustion engine may refer to a main driving shaft of the engine 1 transferring the driving force to the driving shaft, but is not necessarily limited thereto, and may be a shaft driving apparatuses additionally mounted in the engine 1 of an air conditioner pump, a cooling water pump, or the like and operated using the torque.

In addition, when the motor generator 10 does not receive the driving force from the turbine 340 because the working fluid is not circulated, the motor generator 10 may serve as a motor. More specifically, since the turbine 340 and the pulley are connected to each other by the clutch, power passing through an inverter 30 by using the battery 20 as a power source is supplied to the motor generator 10 to thereby rotate the motor generator 10 and the turbine 340 and pulley connected to the motor generator 10, and the pulley is connected to the rotation shaft installed in the internal combustion engine by a belt (alternatively, a chain, a gear, or the like), the motor generator 10 may apply the driving force to the rotation shaft installed in the internal combustion engine.

Meanwhile, a gear train 7 of the engine 1 may be installed with a driving force transferring unit 40 so as to be engaged therewith, wherein the driving force transferring unit 40 may be used to receive power from the battery 20 through inverter 30 to thereby start the engine 1, and serve as a driving source assisting the engine 1 to thereby to increase an output of the engine 1 or decrease a load of the engine 1, thereby making it possible to serve to improve fuel efficiency of the engine 1.

Hereinafter, a configuration related to the solution of the problem that the working fluid supplied to the turbine 340 is liquefied and effect generated from the configuration will be then described.

The EGR side heat exchanging unit 300 has a configuration cooling the EGR gas and transferring heat from the EGR gas to the working fluid by performing the heat exchange between the EGR gas and the working fluid, and the gas-liquid separator 330 is formed between the EGR side heat exchanging unit 300 and the turbine 340 and supplies only gas component of the working fluid to the turbine 340. Here, it is noted that the phrase "only gas component of the working fluid is supplied to the turbine 340" is used to include that the working fluid which is in the gas state of mathematically and exactly 100% is supplied to the turbine 340 as well as the working fluid mainly including the gas component by removing the most liquid component as a state in which the liquid component is separated from the working fluid is supplied to the turbine 340.

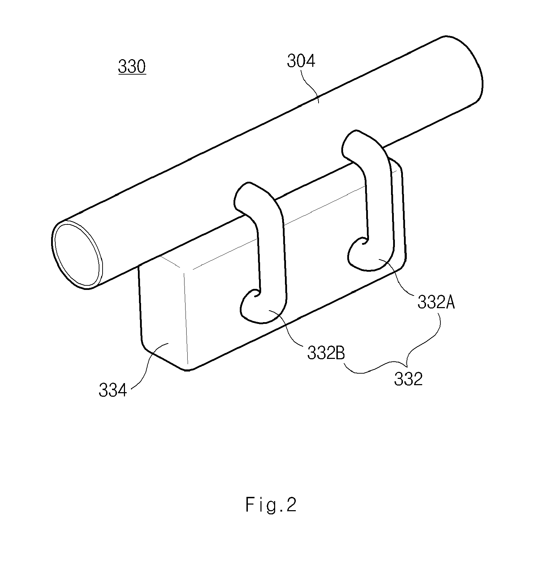

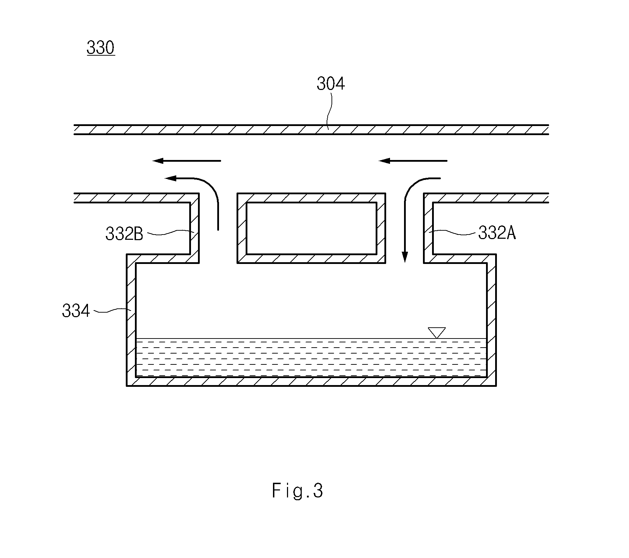

FIG. 2 is a perspective view of a gas-liquid separator included in various embodiments of the present invention and FIG. 3 is a schematic view showing a working fluid flowing in the gas-liquid separator and a turbine introducing pipe.

Referring to FIGS. 1 to 3, the gas-liquid separator 330 may include a liquid receiving chamber 334 capable of receiving the working fluid in the liquid state therein and a communicating pipe 332 fluidically-communicating the turbine introducing pipe 304 and the liquid receiving chamber 334 with each other.

Here, the communicating pipe 332 may include a first communicating pipe 332A disposed so as to be relatively adjacent to the EGR side heat exchanging unit 300 and a second communicating pipe 332B disposed so as to be relatively adjacent to the turbine 340, among the EGR side heat exchanging unit 300 and the turbine 340.

A flow of the working fluid transferred from the EGR side heat exchanging unit 300 to the turbine introducing pipe 304 is divided at a branch point of the first communicating pipe 332A and the turbine introducing pipe 304, such that a portion thereof continuously flows along the turbine introducing pipe 304 and the other portion thereof is introduced into the liquid receiving chamber 334. Although the working fluid in the gas state continuously flows along the turbine introducing pipe 304 or is introduced into the liquid receiving chamber 334, it may be joined in the turbine introducing pipe 304 through the second communicating pipe 332B. However, since the working fluid in the liquid state is introduced and stored in the liquid receiving chamber 334 through the first communicating pipe 332A by gravity, it may not joined in the turbine introducing pipe 304 through the second communicating pipe 332B. By the scheme or configuration as described above, only the working fluid in the gas state may be supplied to the turbine 340 through the turbine introducing pipe 304.

Since the working fluid introduced from the EGR side heat exchanging unit 300 to the turbine introducing pipe 304 is moved at high speed, a portion of the working fluid in the liquid state may not be moved to the first communicating pipe 332A. However, since the second communicating pipe 332B is disposed at the lower side of the flow of the working fluid, the working fluid in the liquid state which is not moved to the first communicating pipe 332A may be stored in the liquid receiving chamber 334 through the second communicating pipe 332B.

Even in the case in which the number of communicating pipe 332 is one, the working fluid in the liquid state may be stored in the liquid receiving chamber 334 and even though the working fluid in the gas state is introduced into the liquid receiving chamber 334 through the communicating pipe 332, it may again flow out from the liquid receiving chamber 334 through the communicating pipe 332. However, in the case in which the number of the communicating pipe 332 is at least two as described above, since a path that which the working fluid in the gas state is introduced into the liquid receiving chamber 334 and a path that the working fluid in the gas state flows out from the liquid receiving chamber 334 are different from each other, the flow of the working fluid may be smooth.

If a diameter of a portion connected to the first communicating pipe 332A of the turbine introducing pipe 304 is larger than a diameter of a portion connected to the second communicating pipe 332B of the turbine introducing pipe 304, the turbine introducing pipe 304 serves as a venture pipe, such that the working fluid in the liquid state stored in the liquid receiving chamber 334 may be sucked into the turbine introducing pipe 304. On the contrary, if the diameter of the portion connected to the first communicating pipe 332A of the turbine introducing pipe 304 is smaller than the diameter of the portion connected to the second communicating pipe 332B of the turbine introducing pipe 304, the phenomenon that the working fluid in the liquid state is sucked into the turbine introducing pipe 304 is not generated, but since a cross-sectional area of the turbine introducing pipe 304 in which the working fluid moves is gradually increased, a speed of the working fluid becomes slow and the turbine 340 may not be rotated at high speed.

Therefore, it is desirable that the diameter of the portion connected to the first communicating pipe 332A of the turbine introducing pipe 304 is the same or substantially the same as the diameter of the portion connected to the second communicating pipe 332B of the turbine introducing pipe 304, and in this case, the phenomenon that the working fluid in the liquid state stored in the liquid receiving chamber 334 is sucked into the turbine introducing pipe 304 may be prevented and strong energy may be applied to the turbine 340.

It is desirable that the liquid receiving chamber 334 is disposed at a position lower than the turbine introducing pipe 304 so that the working fluid in the liquid state passing through the turbine introducing pipe 304 may be smoothly stored in the liquid receiving chamber 334 by gravity even though a separate pump is not present.

In addition, it is desirable that upper end portions of the first communicating pipe 332A and the second communicating pipe 332B are connected to a lower portion of the turbine introducing pipe 304 or are connected to at least a side portion thereof so that the working fluid in the liquid state may be maximally separated from the working fluid passing through the turbine introducing pipe 304.

Since the system of recycling according to various embodiments of the present invention includes the gas-liquid separator 330, it may intactly supply the working fluid in the gas state in which the liquid component is maximally removed from the working fluid to the turbine 340, thereby making it possible to maximally secure an internal effective volume in the turbine 340 and increase efficiency of recycling the exhaust heat.

According to various embodiments of the present invention, the system of recycling exhaust heat from the internal combustion engine capable of increasing efficiency thereof by maximally securing the internal effective volume in the turbine may be provided.

For convenience in explanation and accurate definition in the appended claims, the terms "upper" or "lower", and etc. are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

### SYMBOL OF EACH OF THE ELEMENTS IN THE FIGURES

100: working fluid circulating line
200: EGR line
300: EGR side heat exchanging unit
310: super heater
320: EGR cooler
304: turbine introducing pipe
400: exhaust side heat exchanging unit

## Claims

1. A system of recycling exhaust heat from an internal combustion engine, the system comprising:
a working fluid circulating line configured to rotate a turbine with a working fluid vaporized by heat received from an EGR line of the internal combustion engine;
an EGR side heat exchanging unit configured to perform a heat exchange between an EGR gas and the working fluid to thereby cool the EGR gas and transfer heat from the EGR gas to the working fluid; and
a gas-liquid separator configured to be formed between the EGR side heat exchanging unit and the turbine to thereby supply only a gas component of the working fluid to the turbine.

2. The system according to claim 1, wherein the gas-liquid separator includes:
a liquid receiving chamber capable of receiving the working fluid in a liquid state therein; and
a communicating pipe fluidically-communicating a turbine introducing pipe, which is a conduit connecting the turbine to the EGR side heat exchanging unit, and the liquid receiving chamber with each other.

3. The system according to claim 2, wherein the communicating pipe includes a first communicating pipe disposed to be adjacent to the EGR side heat exchanging unit and a second communicating pipe disposed to be adjacent to the turbine.

4. The system according to claim 3, wherein a diameter of a portion connected to the first communicating pipe of the turbine introducing pipe is substantially the same as a diameter of a portion connected to the second communicating pipe of the turbine introducing pipe.

5. The system according to any one of claims 2 to 4, wherein the liquid receiving chamber is disposed at a lower position than the turbine introducing pipe.

6. The system according to any one of claims 2 to 5, wherein the communicating pipe has an upper end portion connected to a side portion or a lower portion of the turbine introducing pipe.

7. The system according to any one of claims 1 to 6, further comprising an exhaust side heat exchanging unit installed at an exhaust line discharging an exhaust gas to an outside to thereby transfer heat from the exhaust gas to the working fluid.

8. The system according to claim 7, wherein the exhaust side heat exchanging unit is disposed at a higher side of the working fluid circulating line than the EGR side heat exchanging unit.

9. The system according to claim 7 or 8, wherein the working fluid always passes through the exhaust side heat exchanging unit, and
the working fluid passes through the EGR side heat exchanging unit only when a temperature of the exhaust gas flowing in the EGR line is equal to or greater than a specific temperature T1.

10. The system according to claim 9, wherein the specific temperature T1 is 500 °C.
